# EUROPEAN PATENT APPLICATION

(11) **EP 1 583 369 A2**
(43) Date of publication of application: **05.10.2005**
(21) Application number: 05102135.0
(22) Date of filing: 18.03.2005
(51) Int. Cl.: H04N 7/50

(54) **Adaptive intra-macroblock refresh method.**

(30) Priority: 22.03.2004 KR 2004019387
(71) Applicant: LG ELECTRONICS INC., Seoul 150-875 (KR)
(72) Inventor: YOON, Doe Hyun, Seoul (KR); SUH, Jae Won, SEOUL (KR); HWANG, Young Hooi, SEOUL (KR)
(74) Representative: Ekström, Nils

(57) **Abstract**

The present invention provides an adaptive intra -macroblock refresh method, by which an intra-macroblock refresh technology is applied in a manner of considering an error recovering method of a decoder. The present invention includes the steps of measuring a correlation between a motion vector of a currently encoded macroblock and a motion vector of a neighbor macroblock, recording a measurement result of the correlation in a refresh map by block unit, and performing encoding using the refresh map.

## Description

This application claims the benefit of the Korean Application No. P2004-0019387 filed on March 22, 2004, which is hereby incorporated by reference.

### BACKGROUND OF THE INVENTION

### Field of the Invention

The present invention relates to an adaptive intra-macroblock refresh method, by which video information lost or damaged by an error on a system for compressed video transmission is effectively and quickly recovered or concealed.

### Discussion of the Related Art

Generally, there are an intra-refresh method and error concealing method to recover video information damaged by an error under a channel environment exposed to errors effectively and quickly.

In the intra-refresh method, an encoder encodes video information periodically or non-periodically into intra-frame or intra-macroblock to transfer to minimize influence and propagation caused by damaged data in case that the video information is damaged by channel error in a receiving end.

In the error concealing method, a decoder conceals video information damaged or lost by transmission error using normally received data.

The intra-refresh methods can be representatively categorized into a periodic intra -refresh method that periodically encodes video information into intr a-frame or intra-macroblock to transfer and an adaptive intra-refresh technology recommended by MPEG4.

The intra-macroblock refresh is a method of inserting a predetermined number of intra-macroblocks decided by an encoder forcibly to enable a decoder to quickly recover the video information damage or loss occurring due to channel error.

In most cases, an intra-refresh unit is a frame unit. Yet, periodical insertion of intra -frame, which brings about serious video delay phenomenon and serious degradation of image quality under the same bit rate environment, is inefficient in a low bit rate real-time transmission system.

Hence, a video compression standard for low bit rate real-time video transmission such as H.263 and MPEG4 uses a refresh method of macroblock unit. As a representative method, the adaptive intra-macroblock refresh technology is recommended in the MPEG4 Video Compression Standard Appendix H.

The adaptive intra-macroblock refresh technology recommended by MPEG4 is explained as follows.

First of all, the number of intra-macroblocks in VOP (video object plane) is decided according to a bit rate or frame rate prior to being fixed or encoded.

Once the number of the intra-macroblocks is decided in VOP, the number of macroblocks to apply adaptive intra -refresh by the number of intra-macroblocks of VOP and the number of macroblocks having applied periodic intra -refresh thereto are decided.

A macroblock of which refresh map is set to '1' applies adaptive intra-macroblock refresh amounting to the number of macroblocks to which adaptive intra-refresh will be applied. A macroblock of which refresh map is set to '0' applies periodic intra-macroblock refresh amounting to the number of macroblocks to which adaptive intra-refresh will be applied.

In the adaptive intra-macroblock refresh, a motion of each of the macroblocks is preferentially measured. In case of a macroblock having many motions, macroblocks amounting to the decided number are encoded into intra-macroblocks only.

In doing so, a motion measurement result is recorded in a refresh map by macroblock unit. An encoder decides whether to encode the currently encoded macroblocks into intra-macroblocks with reference to the recorded refresh map.

In this case, the motion is measured by comparison of SAD (sum absolute difference) of a current macroblock and predefined SAD threshold. If the SAD of the current macroblock is greater than the SAD threshold, the current macroblock is decided as a macroblock having a motion and is then encoded into intra - macroblock. The SAD threshold uses mean SAD by macroblock unit of frame.

An adaptive intra-macroblock refresh method according to a related art is explained with reference to the drawings as follows.

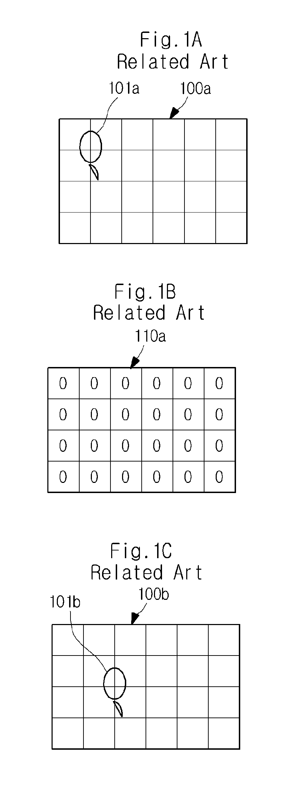

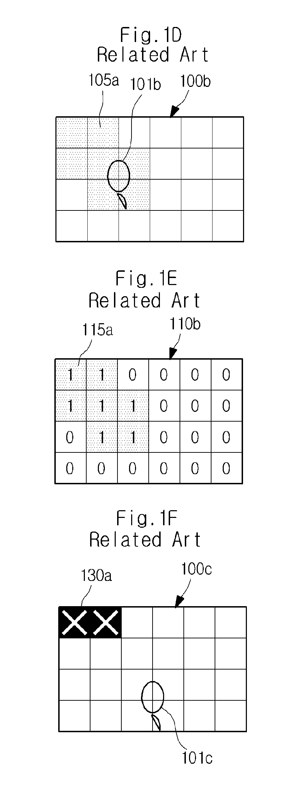

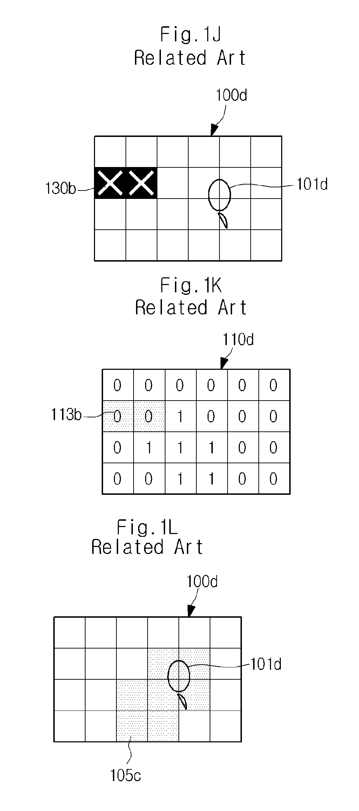

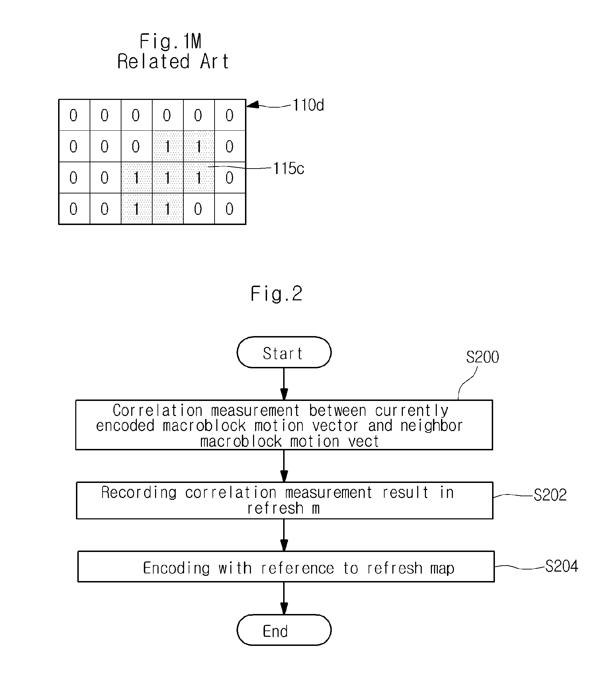

FIGs. 1A to 1M are diagrams for explaining an adaptive intra-macroblock refresh method according to a related art.

All macroblocks of a first VOP 100a, as shown in FIG. 1A, are encoded into intra-macroblocks. Since a previous VOP fails to exist, a refresh map 110a, as shown in FIG. 1B, is recorded as '0'. Reference numbers 101a to 101d mean specific video information such as a human face.

A second VOP 100b, as shown in FIG. 1C, is encoded into P-VOP. In dong so, an encoder encodes each macroblock using the refresh map 110a generated in FIG. 1B.

Since all values of the refresh map 110a in FIG. 1B are '0', the encoder does not perform intra-macroblock refresh on the second VOP 100b but measures each motion of the macroblocks using an SAD of a current macroblock and an SAD threshold.

Each motion of the macroblocks is measured according to the variation of the video information 101b shown in FIG. 1C.

If there exists an area 105a having the SAD of the current macroblock greater than the SAD threshold, a value of an area 115a having the SAD of the current macroblock greater than the SAD threshold like a refresh map 110b in FIG. 1E is updated to '1' from '0' in the refresh map 110a in FIG. 1B.

Subsequently, a third VOP 100c, as shown in FIG. 1F, is encoded into intra-macroblocks 130a. In doing so, the encoder encodes the macroblock of the area 115a having the SAD greater than the SAD threshold as many as the number of predefined intra - macroblocks into the intra-macroblocks 130a using the refresh map generated in FIG. 1E. In the present embodiment, it is exemplary shown that a case that the number of the intra-blocks is 2.

Namely, the encoder checks whether the current macroblock is a target of intra-macroblock refresh. If it is the target of the intra-macroblock refresh, the encoder encodes it into the intra-macroblocks 130a.

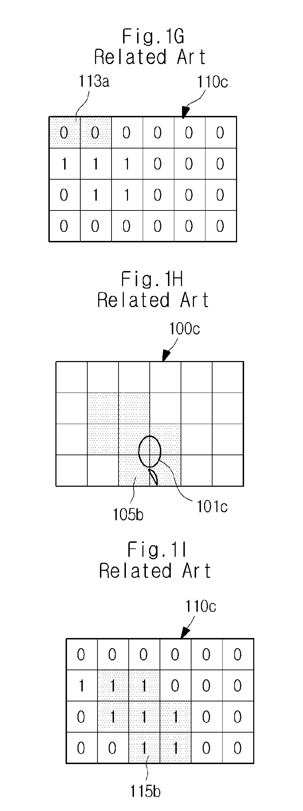

In other words, the encoder encodes the intra - macroblock refresh target into the intra -macroblocks 130a in FIG. 1F and then updates the refresh map 110b in FIG. 1E like FIG. 1G. Namely, the encoder changes a value of the refresh map of the macroblock encoded into the intra-macroblocks into '0' and then performs the corresponding update like FIG. 1G.

And, the encoder measures the motion of each macroblock using the SAD of the current macroblock and the SAD threshold.

If there exists an area 105b, as shown in FIG. 1H, having the SAD of the current macroblock greater than the threshold as a result of the macroblock measurement result, a value of an area 115b having the SAD of the current macroblock greater than the threshold is updated to '1', as shown in FIG. 1I, in a refresh map 110c in FIG. 1G.

Subsequently, a fourth VOP 100d is encoded into intra - macroblocks 130, as shown in FIG. 1J, like the encoding method of the third VOP 100c. In doing so, the encoder encodes the macroblock of the area 115b having the SAD greater than the SAD threshold as many as the number of predefined intra -macroblocks into the intra-macroblocks 130b using the refresh map generated in FIG. 1E.

Namely, the encoder checks whether the current macroblock is a target of intra-macroblock refresh. If it is the target of the intra-macroblock refresh, the encoder encodes it into the intra-macroblocks 130b.

In other words, the encoder encodes the intra - macroblock refresh target into the intra macroblocks 130b in FIG. 1J and then updates the refresh map 110 c in FIG. 1I like FIG. 1J. Namely, the encoder changes a value of the refresh map of the macroblock encoded into the intra-macroblocks into '0' and then performs the corresponding update like FIG. 1K.

And, the encoder measures the motion of each macroblock using the SAD of the current macroblock and the SAD threshold.

If there exists an area 105c, as shown in FIG. 1L, having the SAD of the current macroblock greater than the threshold as a result of the macroblock measurement result, a value of an area 115c having the SAD of the current macroblock greater than the threshold is updated to '1', as shown in FIG. 1M, in a refresh map 110d in FIG. 1K.

In the related art adaptive intra-macroblock refresh method, if a mean frame SAD is greater than the threshold, the intra-refresh map is updated to '1' to perform the intra-macroblock refresh.

However, since a case that the refresh map becomes '1' relatively increases in case of an object having a great motion like the face area in a mobile terminal system, the intra - macroblock refresh area is unable to catch up with the substantially needed refresh area. Hence, the effect of the adaptive intra-macroblock refresh effect is reduced.

Moreover, the effect of the adaptive intra-macroblock refresh increases or decreases according to the error concealing method in the decoder. Yet, since the error concealing method is not taken into consideration, image quality degradation and error propagation problems take place.

### SUMMARY OF THE INVENTION

Accordingly, the present invention is directed to an adaptive intra-macroblock refresh method that substantially obviates one or more problems due to limitations and disadvantages of the related art.

An object of the present invention is to provide an adaptive intra-macroblock refresh method, by which an intra-macroblock refresh technology is applied in a manner of considering an error recovering method of a decoder.

Another object of the present invention is to provide an adaptive intra-macroblock refresh method, by which image quality degradation and error propagation are maximally prevented for recovery in a manner of preferentially performing intra - macroblock refresh on a macroblock having a greatest possibility of image degradation in error concealment.

A further object of the present invention is to provide an adaptive intra-macroblock refresh method, by which a high-quality video service can be provided under a channel environment exposed to an error like a mobile communication environment and in which video information lost and damag ed by an error is effectively and quickly recovered or concealed on a mobile terminal system for compressed video transmission.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an adaptive intra-macroblock refresh method according to the present invention includes the steps of measuring a correlation by comparing motion vectors between macroblocks adjacent to each other and encoding the macroblocks into intra-macroblocks or inter-macroblocks according to the correlation.

In another aspect of the present invention, an adaptive intra-macroblock refresh method includes the steps of measuring a correlation between a motion vector of a currently encoded macroblock and a motion vector of a neighbor ma croblock, recording a measurement result of the correlation in a refresh map by block unit, and performing encoding using the refresh map.

In a further aspect of the present invention, an adaptive intra-macroblock refresh method includes the steps of comparing a threshold to an absolute value difference between a motion vector of a currently encoded macroblock and a motion vector of a neighbor macroblock, if the absolute value difference is greater than the threshold, deciding the currently encoded macroblock as a macroblock having a small correlation, updating a value of the small-correlation macroblock to '1' from '0' in a refresh map, and encoding macroblocks amounting to a predefined number among the macroblocks having the macroblock value of '1' in the refresh map into intra-macroblocks.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIGs. 1A to 1M are diagrams for explaining an adaptive intra-macroblock refresh method according to a related art;

FIG. 2 is a flowchart of an adaptive intra-macroblock refresh method according to the present invention; and

FIGs. 3A to 1M are diagrams for explaining an adaptive intra-macroblock refresh method according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

FIG. 2 is a flowchart of an adaptive intra -macroblock refresh method according to the present invention.

Referring to FIG. 2, an encoder measures correlation between a motion vector of a currently encoded macroblock and a motion vector of a neighbor macroblock (S200).

Namely, the encoder measures the correlation between the motion vector of the currently encoded macroblock and the motion vector of the neighbor macroblock and then encodes the macroblock having small correlation into an intra -macroblock.

The correlation is measured via comparison of an absolute difference value between the motion vector of the currently encoded macroblock and the motion vector of the neighbor macroblock and a threshold of the absolute difference value between the motion vectors.

The threshold is experimental data and can vary according to a video size and bit rate. In case of encoding a QCIF size video at 64Kbps, the threshold is set to '5' to provide best performance.

If the neighbor macroblock is an intra -macroblock when the encoder compares the correlation between the motion vectors, the encoder preferably measures the correlation using the motion vector of the neighbor macroblock recovered to an inter - macroblock.

In the description of the present invention, an embodiment of measuring correlation using a motion vector of a macroblock in the vicinity of an upper side.

In case of a macroblock situated at an upper image boundary, there is no upper macroblock. Hence, a usable neighbor macroblock is limited. Preferably, the correlation is measured using a motion vector of a macroblock at the same location of a former frame.

In this case, the correlation is measured using the motion vector of the macroblock in the vicinity of the upper side. This is because a case that the error concealing method in the decoder uses the motion vector in the vicinity of the upper side is assumed.

Namely, as another object of the present invention is to solve the problem that the adaptive intra-macroblock refresh is increased or decreased according to the error concealing method in the decoder, the intra -macroblock refresh is preferentially performed on the macroblock having the great possibility of image quality degradation in error concealment.

For instance, the error concealing method in the decoder assumed by the present invention refers to the motion vector of the macroblock in the vicinity of the upper side in the macroblock having the error occurred therein.

The error is concealed in a manner of bringing a portion corresponding to the error -occurring macroblock in a previous frame using the macroblock in the vicinity of the upper side and the motion vector of the macroblock in the vicinity of the upper side and then inserting the brought portion in the error-occurring macroblock of a present frame.

The above-explained error concealing method raises the possibility of the image quality degradation in error concealment in case that correlation between a motion vector of an arbitrary macroblock and a motion vector of a macroblock in the vicinity of an upper side of the arbitrary macroblock is small.

Hence, by measuring the correlation between a motion vector of a currently encoded macroblock and a motion vector of a macroblock in the vicinity of an upper side and by encoding the macroblock having small correlation into intra-macroblock preferentially, intra-macroblock refresh associated with the error concealing method in the decoder is enabled.

Thus, the present invention can perform the intra-macroblock refresh more effectively in case that the error concealing method in the decoder uses the motion vectors. In doing so, the macroblock of which correlation is measured preferably has the same location of the macroblock of which motion vector is used in the error concealing method.

Once the step 200 is performed, the encoder records the correlation measurement result in a refresh map by macroblock unit (S202).

Namely, the encoder measures the correlation between the motion vector absolute value difference and the threshold. If the motion vector absolute value difference is greater than the threshold, the encoder records the value of the refresh map as '1'. If the motion vector absolute value difference is smaller than the threshold, the encoder records the value of the refresh map as '0'.

After completion of the step S202, the encoder performs encoding using the recorded refresh map (S204). Namely, the encoder encodes the macroblock having the refresh map value of 1 into intra-macroblock or encodes the macroblock having the refresh map value of 0 into inter-macroblock.

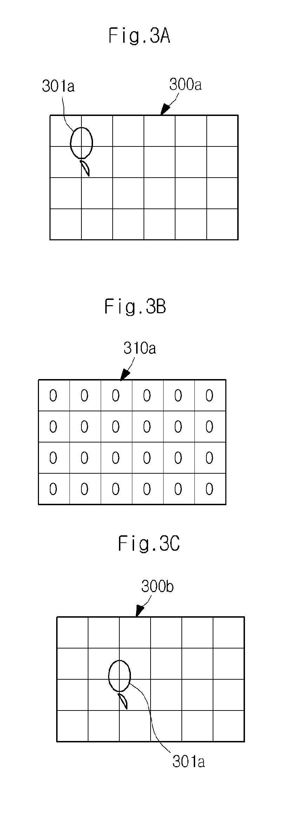

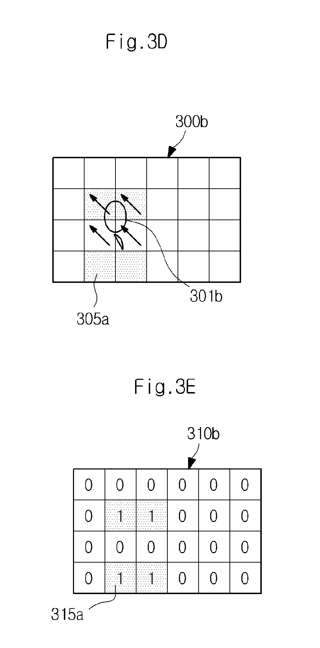

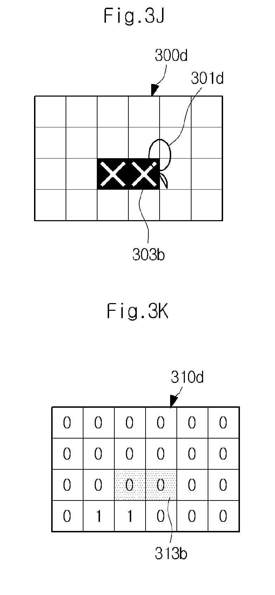

An encoding method using the refresh map is explained with reference to FIGs. 3A to 3M as follows.

FIGs. 3A to 1M are diagrams for explaining an adaptive intra-macroblock refresh method according to the present invention.

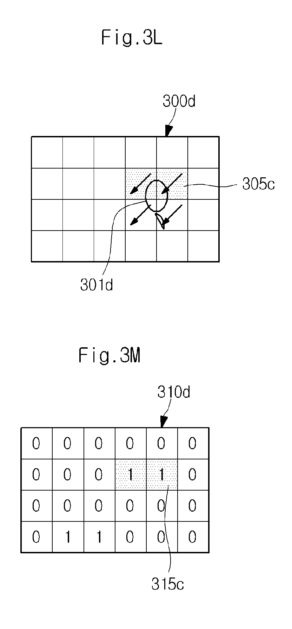

All macroblocks of a first VOP 300a, as shown in FIG. 3A, are encoded into intra-macroblocks. Since a previous VOP fails to exist, a refresh map 310a, as shown in FIG. 3B, is recorded as '0' . Reference numbers 301a to 301d mean specific video information such as a human face.

A second VOP 300b, as shown in FIG. 3C, is encoded into P-VOP. In dong so, an encoder encodes each macroblock using the refresh map 310a generated in FIG. 3B.

Since all values of the refresh map 310a in FIG. 3B are '0', the encoder does not perform intra-macroblock refresh on the second VOP 100b but measures correlation using an absolute value difference between a current macroblock motion vector and a neighbor macroblock motion vector and a threshold.

Preferably, the correlation is measured using the threshold and the absolute value difference between the motion vector of a current macroblock and a motion vector of a macroblock in the vicinity of an upper side of the current macroblock.

If there exists an area 305a, as shown in FIG. 3D, in which the absolute value difference between the motion vector of the current macroblock and the motion vector of the macroblock in the vicinity of the upper side of the current macroblock is greater than the predefined threshold as a result of the macroblock correlation measurement, the refresh map 310a in FIG. 3B is updated like FIG. 3E.

Arrows in FIG. 3D indicate motion vectors. The macroblock failing to be provided with the arrow means that there exists no motion.

Namely, the value of the refresh map of the area 305a, in which the absolute value difference between the motion vector of the current macroblock and the motion vector of the neighbor (upper) macroblock is greater than the predefined threshold, is updated to '1' from '0'.

Subsequently, a third VOP 300c is encoded like FIG. 3F. In doing so, the encoder encodes each macroblock using the refresh map 310b generated in FIG. 3E.

In the present embodiment, it is exemplary shown that a case that the number of the intra -blocks is 2.

The encoder checks whether the current ma croblock is a target of intra-macroblock refresh. If it is the target of the intra-macroblock refresh, the encoder encodes it into intra - macroblocks 330a.

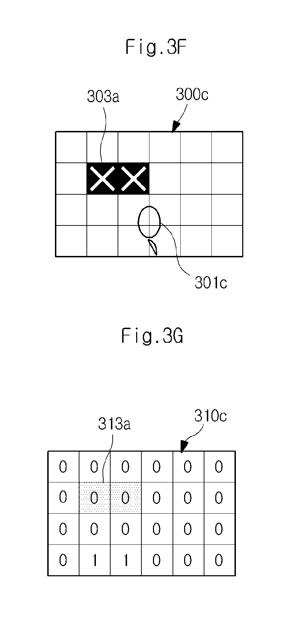

In other words, the encoder encodes the intra - macroblock refresh target area into the intra -macroblocks 330a in FIG. 3F and then updates the refresh map 310b in FIG. 3E like FIG. 3G. Namely, the encoder changes a value of the refresh map 310c of the macroblock 313a encoded into the intra-macroblocks into '0' and then performs the corresponding update like FIG. 3G.

Subsequently, the encoder measures the correlation using the predefined threshold and the absolute value difference between a motion vector of a current macroblock and a motion vector of a neighbor macroblock.

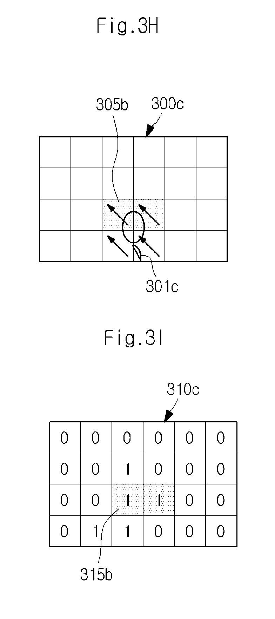

If there exists an area 305b, as shown in FIG. 3H, in which the absolute value difference between the motion vector of the current macroblock and the motion vector of the neighbor macroblock is greater than the predefined threshold as a result of the macroblock correlation measurement, the refresh map 310c in FIG. 3G is updated like FIG. 3I. Namely, the value of the refresh map of the area 305b, in which the absolute value difference between the motion vector of the current macroblock and the motion vector of the neighbor macroblock is greater than the predefined threshold, is updated to '1' from '0'.

Subsequently, a fourth VOP 300d is encoded like FIG. 3J. In doing so, the encoder encodes each macroblock using the refresh map 310c generated in FIG. 3I.

The encoder checks whether the current macroblock is a target of intra-macroblock refresh. If it is the target of the intra-macroblock refresh, the encoder encodes it into intra - macroblocks 303b.

In other words, the encoder encodes the intra - macroblock refresh target area into the intra -macroblocks 303b in FIG. 3J and then updates the refresh map 310c in FIG. 3G like FIG. 3K. Namely, the encoder changes a value of the refresh map 310d of the macroblock 313b encoded into the intra -macroblocks into '0' and then performs the corresponding update like FIG. 3K.

Subsequently, the encoder measures the correlation using the predefined threshold and the absolute value difference between a motion vector of a current macroblock and a motion vector of a neighbor macroblock.

If there exists an area 305c, as sh own in FIG. 3L, in which the absolute value difference between the motion vector of the current macroblock and the motion vector of the neighbor macroblock is greater than the predefined threshold as a result of the macroblock correlation measurement, the refresh map 310d in FIG. 3K is updated like FIG. 3M. Namely, the value of the refresh map of the area 305c, in which the absolute value difference between the motion vector of the current macroblock and the motion vector of the neighbor macroblock is great er than the predefined threshold, is updated to '1' from '0'.

If the number of intra-macroblocks is decided in VOP, the number of macroblocks, to which adaptive intra -refresh will be applied, and the number of macroblocks, to which periodic intra-refresh is applied, can be decided by the number of the intra-macroblocks in VOP.

Adaptive intra-macroblock refresh is applicable to the macroblock of which refresh map is decided as '1' as many as the number of the macroblocks to which the adaptive intra -refresh will be applied. And, periodic intra -macroblock refresh is applicable to the macroblock of which refresh map is decided as '0' as many as the number of the macroblocks to which the periodic intra-refresh will be applied.

The present invention repeats the above-explained steps to perform the intra-macroblock refresh.

Accordingly, the present invention is capable of restoring and concealing the video information lost or damaged by errors under a transmission environment exposed to the errors such as a mobile communication environment effectively and quickly. Therefore, the present invention can provide the adaptive intra-macroblock refresh method capable of providing the high-quality video service in the products such as a next generation mobile communication terminal enabling video communications.

It will be apparent to those skilled in the art that various modifications and variations can be made in the present invention. Thus, it is intended that the present invention covers the modifications and variations of this invention provided they come within the scope of the appended claims and their equivalents.

## Claims

1. An adaptive intra-macroblock refresh method comprising the steps of:
measuring a correlation by comparing motion vectors between macroblocks adjacent to each other; and
encoding the macroblocks into intra-macroblocks or inter-macroblocks according to the correlation.

2. The adaptive intra-macroblock refresh method of claim 1, wherein the correlation is measured by comparing an absolute value difference between the motion vectors of the macroblocks adjacent to each other to a predefined threshold.

3. The adaptive intra-macroblock refresh method of claim 2, wherein if the absolute value difference is greater than the threshold, the macroblock is encoded into the intra-macroblock and wherein if the absolute value difference is smaller than the threshold, the macroblock is encoded into the inter -macroblock.

4. The adaptive intra-macroblock refresh method of claim 1, wherein the correlation measurement is associated with an error concealing method.

5. An adaptive intra-macroblock refresh method comprising the steps of:
measuring a correlation between a motion vector of a currently encoded macroblock and a motion vector of a neighbor macroblock;
recording a measurement result of the correlation in a refresh map by block unit; and
performing encoding using the refresh map.

6. The adaptive intra-macroblock refresh method of claim 5, wherein the correlation is measured by comparing an absolute value difference between the motion vector of the currently encoded macroblock and the motion vector of the neighbor macroblock to a predefined threshold.

7. The adaptive intra-macroblock refresh method of claim 5, wherein if the absolute value difference between the motion vectors is greater than the threshold according to the measurement result of the correlation, a value of the refresh map is changed into '1'.

8. The adaptive intra-macroblock refresh method of claim 5, the step of performing the encoding comprising the steps of;
deciding whether the current macroblock is a target of intra-macroblock refresh; and
if the current macroblock is the target of the intra - macroblock refresh, encoding macroblocks amounting to a predefined number into the intra-macroblocks.

9. The adaptive intra-macroblock refresh method of claim 5, wherein if the neighbor macroblock is an intra -macroblock, the correlation is measured using the motion vector of the neighbor macroblock corresponding to an inter-macroblock.

10. The adaptive intra-macroblock refresh method of claim 5, wherein the neighbor macroblock is situated on at least one of upper, lower, right and left side of a current macroblock.

11. The adaptive intra-macroblock refresh method of claim 5, wherein the correlation is measured for a portion of macroblocks on a peripheral boundary of an image using a motion vector at a same location of a previous frame.

12. The adaptive intra-macroblock refresh method of claim 5, wherein a decision of the macrob lock for measuring the correlation is decided according to an error concealing method in a decoder.

13. An adaptive intra-macroblock refresh method comprising the steps of:
comparing a threshold to an absolute value difference between a motion vector of a currently encoded macroblock and a motion vector of a neighbor macroblock;
if the absolute value difference is greater than the threshold, deciding the currently encoded macroblock as a macroblock having a small correlation;
updating a value of the small-correlation macroblock to '1' from '0' in a refresh map; and
encoding macroblocks amounting to a predefined number among the macroblocks having the macroblock value of '1' in the refresh map into intra-macroblocks.

14. The adaptive intra-macroblock refresh method of claim 13, further comprising the step of encoding the macroblocks having the macroblock value of '0' in the refresh map into inter-macroblocks.

15. The adaptive intra-macroblock refresh method of claim 13, wherein adaptive intra-macroblock refresh is applied to the macroblocks having the refresh map decided as '1' as many as the macroblocks to which adaptive intra-refresh will be applied and wherein periodic intra-macroblock refresh is applied to the macroblocks having the refresh map decided as '0' as many as the macroblocks to which periodic intra-refresh will be applied.

16. The adaptive intra-macroblock refresh method of claim 13, wherein if the neighbor macroblock is the intra -macroblock, a correlation is measured using the motion vector of the neighbor macroblock corresponding to an inter-macroblock.

17. The adaptive intra-macroblock refresh method of claim 13, wherein the neighbor macroblock is situated on at least one of upper, lower, right and left side of a current macroblock.

18. The adaptive intra-macroblock refresh method of claim 13, wherein the correlation is measured for a portion of macroblocks on a peripheral boundary of an image using a motion vector at a same location of a previous frame.

19. The adaptive intra-macroblock refresh method of claim 13, wherein a decision of the macroblock for measuring the correlation is decided according to an error concealing method in a decoder.
